# EUROPEAN PATENT APPLICATION

(11) **EP 3 553 929 A1**
(43) Date of publication of application: **16.10.2019**
(21) Application number: 18166846.8
(22) Date of filing: 11.04.2018
(51) Int. Cl.: H02M 1/36, H02M 3/337, H02M 1/12

(54) **CIRCUIT AND METHOD FOR DRIVING A RESONANT CONVERTER**

(71) Applicant: Vestel Elektronik Sanayi ve Ticaret A.S., 45030 Manisa (TR)
(72) Inventor: TARHAN, Cengiz, 45030 Manisa (TR); DAS, Yilmaz, 45030 Manisa (TR)
(74) Representative: Flint, Adam

(57) **Abstract**

A method of driving a resonance converter circuit, wherein switching elements (FET1-FET4) of a switch network (110) of the resonance converter circuit are controlled by applying a pulse-shaped control signal to control terminals of the switching elements (FET1-FET4) of the switch network. Furthermore, an output voltage level of the resonance converter is adjusted over a predetermined voltage range by changing a dead time or pulse width of the pulse-shaped control signal.

## Description

### Field

The present application relates to a circuit and a method for driving a resonant converter for power sources.

### Background

Resonant conversion is a topic where much effort has been spent in research in universities and industry because of its attractive features: smooth waveforms, high efficiency and high power density. Emerging applications such as flat panel televisions on one hand, and introduction of new regulations, both voluntary and mandatory, concerning efficient use of energy on the other hand, are pushing power designers to find more and more efficient AC-DC conversion systems. This has revamped and broadened the interest in resonant conversion. Generally speaking, resonant converters are switching converters that include a tank circuit actively participating in determining input-to-output power flow.

Resonant converters often comprise a resonant inverter, i.e., a circuit that converts a DC voltage into a sinusoidal voltage (more generally, into an AC voltage with low harmonic content) and provides AC power to a load. To do so, a switch network typically produces a square-wave voltage that is applied to a resonant tank circuit tuned to the fundamental component of the square wave. In this way, the tank circuit primarily responds to this component and negligibly to higher order harmonics, so that its voltage and/or current, as well as those of the load, will be essentially sinusoidal or piecewise sinusoidal.

Resonant converters having tank circuits with two inductors (L) and one capacitor (C) are commonly called LCC resonant converters, wherein the load is connected in parallel to the one capacitor. LLC resonant converters with a significant resonant inductance can be achieved by adding an external inductor in series with its transformer's primary side and are proposed for adjustable wide-range regulated voltage sources. By increasing the switching frequency, the size of the converter can be reduced.

Wide output voltage range of LLC resonant converters is achievable by providing a variable gain over a wide frequency range. For low voltage ranges, the switching frequency may be increased to values higher than the resonant frequency. However, high switching frequency operation increases switching losses of switch components, such as Metal Oxide Semiconductor Field-Effect Transistors (MOSFETs) or Insulated Gate Bipolar Transistors (IGBTs). In high frequency operation, the switch components are switched off under a high circulating current level. In such cases, secondary rectifier diodes may not be softly commutated, which may cause temperature rise in diode junctions. Moreover, due to resulting fast current increases (di/dt), voltage peaks are generated in inductive components, which may cause temperature, interference and isolation problems. Also, both fast current changes (di/dt) and fast voltage changes (dv/dt) cause severe electromagnetic interference (EMI) and noise problems and therefore require better isolation.

For soft starting during start-up, the resonant converter starts with a high switching frequency to obtain a low gain and then the voltage gain of the resonant converter is increased progressively. Since the voltage gain of the resonant converter is inversely proportional to the switching frequency, the soft-start is implemented by sweeping down the switching frequency from an initial high frequency until the output voltage is established. This start-up sequence can cause excessive inrush current and voltage spikes due to the combination of high switching frequency and leakage/stray components of the circuit. These effects (inrush current and voltage spikes) can damage semiconductor components and cause noise problems in the overall system.

### Summary

According to a first aspect disclosed herein, there is provided a method of driving a resonance converter circuit, the method comprising:
controlling switching elements of a switch network of the resonance converter circuit by applying a pulse-shaped control signal to control terminals of the switching elements of the switch network; and
adjusting an output voltage level of the resonance converter over a predetermined voltage range by changing a dead time or pulse width of the pulse-shaped control signal.

In an example, a maximum switching frequency of the switching elements of the switch network may be limited to a value above the resonance frequency of the resonance converter circuit with a margin of 10-50% of the resonance frequency. In a more specific example, the margin may be set to 20%.

In an example, during a start-up operation, the dead time of the pulse-shaped control signal may be decreased from an initial value until a desired output voltage level is established.

In an example, if a minimum dead time has been reached and the desired output voltage level has not been established yet, the pulse frequency of the pulse-shaped control signal may be decreased until the desired output voltage level is established.

In an example, during a steady-state operation, the dead time may be increased from a lowest level until a desired output voltage level is established.

According to a second aspect disclosed herein, there is provided a circuit for driving a resonance converter circuit, the circuit comprising:
a pulse control circuit for generating a pulse-shaped control signal to be applied to control terminals of switching elements of a switch network of the resonance converter circuit;
wherein the pulse control circuit comprises at least one pulse width adjusting circuit for changing a dead time or pulse width of the pulse-shaped control signal in order to adjust an output voltage level of the resonance converter over a predetermined voltage range.

In an example, the pulse control circuit may comprise first and second pulse width adjusting circuits and an inverter element for inverting the pulse-shaped control signal of the second pulse width adjusting circuit to obtain two pulse-shaped control signals with alternating duty cycles to be applied to different switching elements of a respective branch of a switching network of the resonant converter circuit.

In an example, the circuit may be configured to control the at least one pulse width adjusting circuit, during a start-up operation, to decrease the dead time of the pulse-shaped control signal from an initial value until a desired output voltage level is established.

In an example, if a minimum dead time has been reached and the desired output voltage level has not been established yet, the circuit may be configured to decrease the pulse frequency of the pulse-shaped control signal until the desired output voltage level is established.

In an example, the circuit may be configured to control the at least one pulse width adjusting circuit, during a steady-state operation, to increase the dead time from a lowest level until a desired output voltage level is established.

According to a third aspect disclosed herein, there is provided a resonant converter circuit comprising a switch network, a resonant tank circuit and a circuit according to the second aspect.

According to a fourth aspect disclosed herein, there is provided a computer program product comprising program code for producing the method of the first aspect when run on a computer device.

Accordingly, with the above first to fourth aspects, output voltage values in wide range can be obtained while still driving switches of the switch network of the resonant converter at a suitable switching frequency not so far from the resonant frequency of the resonant tank circuit of the resonant converter. Thereby, the resonant converter can be operated to start softly without excessive inrush current and voltage spikes.

It is noted that the above circuits and devices may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

The method can be implemented as program code of a computer program which may be stored and/or distributed on a suitable medium, such as an optical storage medium or a solid-state medium, supplied together with or as part of other hardware, but may also be distributed in other forms, such as via the Internet or other wired or wireless telecommunication systems.

### Brief Description of the Drawings

To assist understanding of the present disclosure and to show how embodiments may be put into effect, reference is made by way of example to the accompanying drawings in which:
Figure 1 shows schematically a block diagram of an example of a resonant converter with pulse width control;
Figure 2 shows a schematic flow diagram of an example of a pulse width control procedure; and
Figure 3 shows schematically a circuit diagram of an example of a more detailed implementation of a full-bridge LLC resonant converter with pulse width control.

### Detailed Description

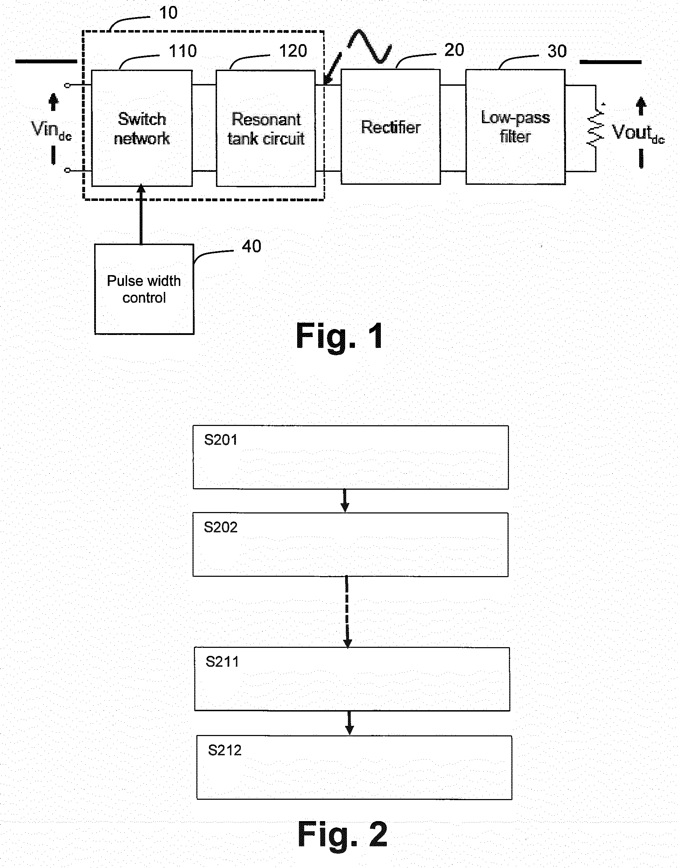

Figure 1 shows schematically an exemplary block diagram of a resonant DC-DC converter with wide range voltage range but less inrush current and voltage spikes.

The resonant converter comprises a resonant inverter stage 10 including a switch network 110 (e.g. a half-bridge or full-bridge switching circuit or the like) and a subsequent resonant tank circuit 120. The switch network 110 receives a DC input voltage Vindc and produces a square-wave voltage that is applied to the resonant tank circuit 120 which is tuned to the fundamental component of the square wave. In this way, the resonant tank circuit 120 will respond primarily to this component and negligibly to higher order harmonics, so that its voltage and/or current, as well as those of the load, will be essentially sinusoidal or piecewise sinusoidal. Moreover, the resonant tank circuit 120 actively participates in determining input-to-output power flow.

As shown in Figure 1, the resonant DC-DC converter further comprises a rectifier stage 20 and a low-pass filter stage 30 so that DC power can be generated by rectifying and, respectively, filtering the AC output of the resonant inverter 10. Thereby, a DC output voltage Voutdc is obtained at the output of the resonant DC-DC converter and can applied to a load.

Furthermore, according to examples of the present application, the above problems resulting from the high switching frequency operation can be solved by providing a pulse control circuit 40 (e.g. a pulse width modulation (PWM) control circuit) for adjusting a dead time or pulse width of a pulse-shaped control signal applied to control terminals of switching components (e.g. power switches) provided in the switch network 110. As a result, the maximum switching frequency can be limited to a value slightly above the resonant frequency of the resonant tank circuit 120, e.g., a value of 10-50%, preferable about 20%, of the resonant frequency can be used as a margin. In this case, a soft-start operation can be implemented by decreasing the dead time (or increasing the pulse width) of the switching network 110 from an initial high value until a desired output voltage level is established. If the output voltage level is still not at an expected value at the minimum dead time, then the switching frequency may be decreased to achieve the exact output value.

To achieve low output voltage ranges that require low voltage gain above the allowable maximum switching frequency during a steady-state operation of the resonance converter circuit, the dead time is increased (or the pulse width is decreased) from the lowest level until a desired output voltage level is established. Therefore, all output voltage values in wide range can be obtained by driving switches at suitable switching frequency values (not so far from the resonant frequency of the resonant tank circuit 120).

Thus, with the proposed pulse width control scheme, the resonant converter can be operated to start softly without excessive inrush current and voltage spikes.

Figure 2 shows a schematic flow diagram of an example of a pulse width control procedure for a resonant converter circuit.

During start-up, in S201, the switch network of the resonant converter circuit is driven by a pulse-width-controlled signal with maximum dead time at resonance frequency of the resonant tank circuit of the resonant converter. Then, in S202, the dead time is decreased (e.g. swapped down progressively) until a desired or selected output voltage level or value is established, while the switching frequency is kept at the resonance point of the resonant tank circuit. As already mentioned above, if the output voltage level or value has still not reached an expected level or value at the minimum dead time, then the switching frequency may be decreased to achieve the exact output level or value.

Later, during a steady state of the resonant converter, in S211, the maximum switching frequency of the switching components of the switch network of the resonant converter is limited to a value slightly above the resonance frequency of the resonant converter. As already mentioned above, the margin can be 10% to 50%, preferably about 20%, above the resonance frequency. To achieve a voltage output range with low output voltages (which otherwise require a low voltage gain above the allowable maximum switching frequency), the dead time of the pulse-width-controlled signal of the switching elements of the inverter stage is increased in S212 from the lowest value upwards until the desired low output voltage level or value is established.

Thereby, output voltage levels or values in a wide range can be achieved while still maintaining a suitable switching frequency (i.e. close to the resonance frequency) for driving the switching elements of the inverter stage of the resonant converter.

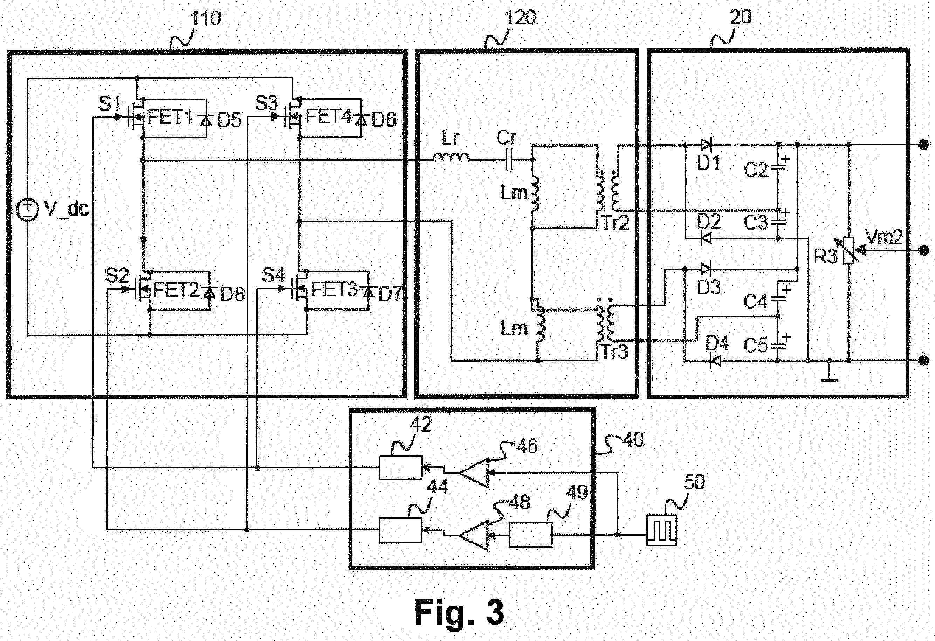

Figure 3 shows a circuit topology of an LLC full-bridge resonant converter with its main stages: switch network 110 (i.e. switching bridge circuit), resonant tank circuit 120 (i.e. LLC tank circuit), transformer and rectifier stage 20. Power switches FET1, FET2, FET3 and FET4, which are MOSFETs, are arranged in the switching bridge circuit 110 to form a square wave generator. This generator provides a square-wave voltage by driving the power switches FET1/FET3 and FET2/FET4 with respective pulse-width controlled signals of alternating duty cycles generated in a pulse control circuit 40 based on a pulse signal generated by a pulse generator 50.

It is noted that a small delay between the alternating duty cycles of the pulse-width-controlled signals may be required to ensure a dead time between successive transitions of the power switches FET1/FET2 and FET3/FET4 of the same branch, both to avoid the possibility of cross conduction and to allow time for zero voltage switching to be attained.

The resonant tank circuit 120, also called a resonant network, consists of a resonant capacitance (Cr) and two inductances comprising a series resonant inductance (Lr) and the magnetizing inductances (Lm) of subsequent transformers Tr2 and Tr3. The resonant tank circuit 120 circulates electric current and, as a result, the energy is circulated and delivered to the load side through the transformers Tr2 and Tr3. On the converter's secondary side, the rectifier stage 20 comprises a full-bridge rectifier circuit (diodes D1 to D4) configured to convert the AC input received from the transformers Tr2, Tr3 to a DC output which is supplied the load (not shown). The output capacitors C2 to C5 are configured to smooth the rectified voltage and current.

The power distribution operation happens twice per switching cycle. First, when the resonant tank circuit 120 is triggered with a positive voltage, current resonates in the positive way in the first half of the switching cycle of the pulse-width controlled signals with alternating duty cycles generated in the pulse control circuit 40. Second, when the resonant tank circuit 120 is triggered with a negative voltage, current resonates in the opposite direction in the second half of the switching cycle of the pulse-width-controlled signals with alternating duty cycles generated in the pulse control circuit 40.

In the proposed example of Figure 3, respective connection points S1, S4 and S2, S3 are driven with adjustable pulse widths of the pulse-width-controlled signals with alternating duty cycles generated by the pulse control circuit 40. More specifically, adjustable pulse width modulation (PWM) signals are generated by setting a proper dead time value according to the desired output voltage, as explained above in connection with Figure 2. I.e., initially, pulse-width-controlled signals with maximum dead time and a pulse frequency close to the resonance frequency of the resonant tank circuit 120 are applied to the respective pair of power switches FET1/FET3 and FET2/FET4, respectively. Then, the dead time is decreased (e.g. swapped down progressively) until a desired or selected output voltage level or value is established, while the switching frequency is kept at the resonance point of the resonant tank circuit 120. During the steady state of the resonant converter, the maximum pulse frequency of the pulse-width-controlled signal of the pulse control circuit 40 is limited to a value slightly above the resonance frequency of the resonant tank circuit 120. As already mentioned above, the margin can be 10% to 50%, preferably about 20%, above the resonance frequency. This can be achieved by correspondingly controlling the output frequency of the pulse generator 50. To achieve a voltage output range with low output voltages, the dead time of the pulse-width-controlled signal of the pulse control circuit 40 is increased from the lowest value upwards until the desired low output voltage level or value is established.

As shown in Figure 3, the pulse control circuit 40 comprises two branches for generating the two pulse-width-controlled signals to be applied to the control terminals of the respective power switches FET1/FET3 and FET2/FET4 of the switch network 110. In the upper branch, the pulse signal of the pulse generator 50 is amplified by a first amplifier 46 and supplied to a first dead time or pulse width adjusting circuit 42. Additionally, in the lower branch, the pulse signal of the pulse generator 50 is first negated by a corresponding inverter element (e.g. a logical NOT gate) 49 and then amplified by a second amplifier 48 and supplied to a second dead time or pulse width adjusting circuit 44.

As an example, the first and second pulse width adjusting circuits 42, 44 may be implemented by a circuit or function that creates a delayed copy of the respective pulse signal routed through the branch and combines the original pulse signal and its copy with a logical AND combination (i.e. the pulse width of the output signal corresponds to the time where both signals are at high level). The delay can be adjusted by an additional control signal (not shown) which reflects the desired output voltage and which can be stored in a look-up table or another type of memory. As an alternative, the pulse control circuit 40 or at least the functionality of the pulse width adjusting circuits 42, 44 can be implemented by a signal processor or other processor-controlled element which is controlled by a software routine.

To summarize, a driving method and circuit of a resonant converter with less inrush current and voltage spikes has been described, wherein pulse-shaped control signal is applied to control terminals of switching elements of a switch network of the resonant converter and a dead time or pulse width of the pulse-shaped control signal is changed in order to adjust an output voltage level of the resonance converter over a predetermined voltage range.

It is noted that the above examples are not intended to limit the scope of the invention. As already indicated above, the invention can be applied to any kind of resonant converter topology involving any kind of power switch. The proposed resonant converter topology can be used e.g. in electric vehicle chargers (such as AC chargers or DC fast chargers), motor drives or all kinds of consumer electronics products (such as television or washing machine applications or the like).

Although at least some aspects of the examples described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of driving a resonance converter circuit, the method comprising:
controlling switching elements (FET1-FET4) of a switch network (110) of the resonance converter circuit by applying a pulse-shaped control signal to control terminals of the switching elements (FET1-FET4) of the switch network; and
adjusting an output voltage level of the resonance converter over a predetermined voltage range by changing a dead time or pulse width of the pulse-shaped control signal.

2. The method according to claim 1, comprising limiting a maximum switching frequency of the switching elements of the switch network (110) to a value above the resonance frequency of the resonance converter circuit with a margin of 10-50% of the resonance frequency.

3. The method according to claim 2, wherein the margin is set to 20%.

4. The method according to any of claims 1 to 3, comprising, during a start-up operation, decreasing the dead time of the pulse-shaped control signal from an initial value until a desired output voltage level is established.

5. The method according to claim 4, further comprising, if a minimum dead time has been reached and the desired output voltage level has not been established yet, decreasing the pulse frequency of the pulse-shaped control signal until the desired output voltage level is established.

6. The method according to any of claims 1 to 5, comprising, during a steady-state operation, increasing the dead time from a lowest level until a desired output voltage level is established.

7. A circuit for driving a resonance converter circuit, the circuit comprising:
a pulse control circuit (40) for generating a pulse-shaped control signal to be applied to control terminals of switching elements (FET1-FET4) of a switch network of a said resonance converter circuit;
wherein the pulse control circuit (40) comprises at least one pulse width adjusting circuit (42, 44) for changing a dead time or pulse width of the pulse-shaped control signal in order to adjust an output voltage level of a said resonance converter over a predetermined voltage range.

8. The circuit according to claim 7, wherein the pulse control circuit (40) comprises first and second pulse width adjusting circuits (42, 44) and an inverter element (49) for inverting the pulse-shaped control signal of the second pulse width adjusting circuit (44) to obtain two pulse-shaped control signals with alternating duty cycles to be applied to different switching elements of a respective branch of a switching network (110) of the resonant converter circuit.

9. The circuit according to claim 7 or 8, wherein the circuit is configured to limit a maximum pulse frequency of the pulse-shaped control signal to a value above the resonance frequency of a said resonance converter circuit with a margin of 10-50% of the resonance frequency.

10. The circuit according to claim 9, wherein the margin is set to 20%.

11. The circuit according to any of claims 7 to 10, wherein the circuit is configured to control the at least one pulse width adjusting circuit (42, 44), during a start-up operation, to decrease the dead time of the pulse-shaped control signal from an initial value until a desired output voltage level is established.

12. The circuit according to claim 11, wherein, if a minimum dead time has been reached and the desired output voltage level has not been established yet, the circuit is configured to decrease the pulse frequency of the pulse-shaped control signal until the desired output voltage level is established.

13. The circuit according to any of claims 7 to 12, wherein the circuit is configured to control the at least one pulse width adjusting circuit (42, 44), during a steady-state operation, to increase the dead time from a lowest level until a desired output voltage level is established.

14. A resonant converter circuit comprising a switch network (110), a resonant tank circuit (120) and a circuit according to any of claims 7 to 13.

15. A computer program product comprising program code for producing the method of claim 1 when run on a computer device.
